# EUROPÄISCHE PATENTSCHRIFT

(11) **EP 3 695 944 B1**
(45) Veröffentlichungstag und Bekanntmachung des Hinweises auf die Patenterteilung: **24.04.2024**
(21) Anmeldenummer: 19156647.0
(22) Anmeldetag: 12.02.2019
(51) Int. Cl.: B28D 1/22, B28D 5/00, B28D 7/04, B23K 37/04, C03B 33/09

(54) **VERFAHREN UND VORRICHTUNG ZUM TEILEN VON PLATTENFÖRMIGEN OBJEKTEN AUS SPRÖDEN WERKSTOFFEN**
METHOD AND DEVICE FOR SPLITTING OF PLATE-SHAPED OBJECTS MADE OF BRITTLE MATERIALS
PROCÉDÉ ET DISPOSITIF DE DIVISION DES OBJETS EN FORME DE PLAQUE DE MATÉRIAUX FRIABLES

(43) Veröffentlichungstag der Anmeldung: 19.08.2020
(73) Patentinhaber: Fraunhofer-Gesellschaft zur Förderung der angewandten Forschung e.V., 80686 München (DE)
(72) Erfinder: Schneider, Jens, 04158 Leipzig (DE); Kaufmann, Kai, 06108 Halle (DE); Turek, Marko, 06108 Halle (DE)
(74) Vertreter: Gagel, Roland

(56) Entgegenhaltungen:
- EP-A1- 2 990 172
- WO-A1-2012/132974
- US-A1- 2008 251 557

## Beschreibung

### Technisches Anwendungsgebiet

Die vorliegende Erfindung betrifft ein Verfahren sowie eine Vorrichtung zum Teilen von plattenförmigen Objekten aus spröden Werkstoffen, bei denen das Objekt zunächst mechanisch belastet wird, um eine gerichtete Spannung senkrecht zu wenigstens einer Sollbruchlinie zu erzeugen, entlang der die Teilung erfolgen soll, und dann während der mechanischen Belastung entlang der Sollbruchlinie mechanisch geschwächt oder thermisch belastet wird, bis das Objekt entlang der Sollbruchlinie bricht.

In verschiedenen Anwendungen müssen Objekte aus spröden Werkstoffen möglichst schädigungsarm geteilt werden, um die mechanische und ggf. auch elektrische Zuverlässigkeit der Objekte bzw. Bauteile nach der Teilung zu gewährleisten. Eine beispielhafte Anwendung ist das Teilen von Solarzellen vor der Herstellung von Solarmodulen. Kleinere Solarzellen mit einem geringen elektrischen Strom führen zu reduzierten Serienwiderstandsverlusten und damit zur Leistungssteigerung in Solarmodulen in einer Größenordnung von 3 bis 5%. Dies erfordert eine Teilung der größeren Solarzellen in kleinere Zellen.

Eine darauf aufbauende Anwendung ist das Teilen von Solarzellen in mehrere schmale Streifen für die Herstellung von geschindelten Solarmodulen oder für die Anwendung im Sondermodulbau, etwa für die gebäudeintegrierte Photovoltaik. Das Teilen der Solarzellen soll dabei ohne mechanische und elektrische Schädigung ablaufen, mit hoher Ausbeute und geringem Automatisierungsaufwand. Eine effiziente, automatisierte Lösung für das Handling und das Teilen von Solarzellen in mehrere schmale Streifen existiert bisher noch nicht.

### Stand der Technik

Für das Teilen bzw. Trennen von plattenförmigen Objekten aus spröden Werkstoffen sind unterschiedliche Techniken bekannt. So kann das Objekt durch mechanisches Sägen, durch Laserschneiden, durch Wasserstrahlschneiden oder mit anderen Bearbeitungsverfahren komplett geteilt werden. Bei spröden Werkstoffen kann das Teilen auch durch Anritzen und nachfolgende mechanische Belastung erreicht werden. So werden bspw. Glasscheiben oft mechanisch mit einem Diamantritzer angeritzt, anschließend über eine Kante gebogen und durch die resultierende Spannung im Material gebrochen. Für Solarzellen ist es auch bekannt, die Sollbruchlinie durch lokale mechanische Schwächung mit einem Laser zu erzeugen und anschließend durch mechanische Belastung zu brechen.

Zum Teilen von Gläsern und Siliziumscheiben sind auch weitere Verfahren, wie das thermische Laserseparieren (TLS) oder das laserthermische Trennen bekannt. Bei diesen Verfahren werden entlang eines gewünschten Rissverlaufes durch lokale thermische Belastung gezielt thermische Spannungen in das Material eingebracht, indem ein Laser das Material erwärmt und bspw. ein nachgeführter Aerosolstrahl den erwärmten Bereich unmittelbar danach kühlt. Die resultierenden thermischen Spannungen führen zum Risswachstum eines vorhandenen Anrisses. Die Wachstumsrichtung des Risses folgt dabei dem lokalen Spannungsfeld, welches über das Bauteil geführt wird. Beispiele für diese Techniken finden sich in der DE 10 2005 038 027 A1 oder der WO 2005/092806 A1.

Aus der EP 2 990 172 A1 ist ein Verfahren zum Teilen von plattenförmigen Objekten aus spröden Werkstoffen gemäß dem Oberbegriff des Patentanspruches 1 bekannt. Bei diesem Verfahren wird die mechanische Belastung so erzeugt, dass das Spannungsmaximum auf bzw. entlang der Sollbruchlinie verläuft. Dies wird bei dieser Druckschrift vorzugsweise durch Dreipunkt- oder durch Vierpunktbiegung erreicht. Soll das Objekt entlang mehrerer Trennlinien geteilt werden, so muss es nach jedem Trennschritt neu eingespannt und entsprechend der gewünschten Sollbruchlinie ausgerichtet werden.

Die WO 2012/132974 A1, die die Präambel der Hauptansprüche offenbart, offenbart ein Verfahren und eine Vorrichtung zum Teilen von plattenförmigen Objekten aus spröden Werkstoffen, bei denen das Objekt in einer Ausgestaltung an eine gleichmäßig gewölbte Anlagefläche gepresst wird, um eine gerichtete Spannung senkrecht zu einer Sollbruchlinie zu erzeugen. Die Teilung erfolgt dann durch zusätzliche thermische Belastung entlang der Sollbruchlinie.

Die Aufgabe der vorliegenden Erfindung besteht darin, ein Verfahren zum Teilen von plattenförmigen Objekten aus spröden Werkstoffen anzugeben, das eine hohe Ausbeute für das Teilen der Objekte ohne signifikante mechanische und elektrische Schädigung aufweist und auch eine effiziente Teilung der Objekte entlang mehrerer Trennlinien ermöglicht. Weiterhin soll eine Vorrichtung zur Durchführung dieses Verfahrens angegeben werden.

### Darstellung der Erfindung

Die Aufgabe wird mit dem Verfahren und der Vorrichtung gemäß den Patentansprüchen 1 und 11 gelöst. Vorteilhafte Ausgestaltungen des Verfahrens und der Vorrichtung sind Gegenstand der abhängigen Patentansprüche oder lassen sich der nachfolgenden Beschreibung sowie den Ausführungsbeispielen entnehmen.

Bei dem vorgeschlagenen Verfahren wird in einer ersten Alternative eine Kombination aus mechanischer Belastung des Objekts und lokaler mechanischer Schwächung entlang der jeweiligen Sollbruchlinie eingesetzt, um das Bauteil entlang der Sollbruchlinie zu teilen. In der zweiten Verfahrensalternative wird die mechanische Belastung mit der lokalen thermischen Belastung durch Erzeugung lokaler thermischer Spannungen kombiniert. Diese lokalen thermischen Spannungen können in gleicher Weise wie beim thermischen Laserseparieren oder laserthermischen Trennen im Bauteil erzeugt werden. Das Bauteil wird bei dem vorgeschlagenen Verfahren zunächst mechanisch belastet, um eine gerichtete Spannung, insbesondere eine Zugspannung, senkrecht zur jeweils gewünschten Bruch- bzw. Trennlinie, in der vorliegenden Patentanmeldung als Sollbruchlinie bezeichnet, zu erzeugen, und wird dann während dieser mechanischen Belastung in der ersten Verfahrensalternative entlang der Sollbruchlinie mechanisch geschwächt, bis das Bauteil entlang der Sollbruchlinie bricht. In der zweiten Verfahrensalternative werden während der mechanischen Belastung lokale thermische Spannungen entlang der Sollbruchlinie in das Bauteil eingebracht, bis das Bauteil entlang der Sollbruchlinie bricht.

Das Verfahren zeichnet sich dadurch aus, dass das zu teilende Objekt für die mechanische Belastung großflächig an eine gleichmäßig gewölbte Anlagefläche gepresst wird, um die gerichtete Spannung gleichmäßig über einen größeren Bereich des Objekts zu erzeugen. Die Spannung wird hierbei also nicht so erzeugt, dass ein Spannungsmaximum entlang der Sollbruchlinie auftritt. Es wird vielmehr über einen größeren Bereich des Objekts, d.h. auch außerhalb der Sollbruchlinie, die gleiche gerichtete Spannung bzw. der gleiche Spannungszustand erzeugt. Der Begriff großflächig ist hierbei so zu verstehen, dass innerhalb dieser Fläche bzw. des zugeordneten größeren Bereichs des Objekts nach Durchführung einer ersten Teilung entlang einer ersten Sollbruchlinie auch noch wenigstens eine zweite Teilung entlang einer zweiten Sollbruchlinie mit den gleichen Parametern erfolgen kann, ohne das Objekt neu einspannen bzw. neu anpressen zu müssen. Das Objekt wird dann während der mechanischen Belastung entlang mehrerer parallel verlaufender Sollbruchlinien in mehrere Streifen geteilt. Das Anpressen des Objektes an die gleichmäßig gewölbte Anlagefläche erfolgt hierbei vorzugsweise durch punktuelles Andrücken über entsprechende Anpresselemente, bspw. Anpressrollen oder Sauggreifer, oder durch punktuelles Ansaugen des Objektes an die Anlagefläche. Hierzu weist das Auflageelement, durch das die Anlagefläche bereitgestellt wird, entsprechende Ansaugkanäle auf.

Mit dieser Vorgehensweise werden unterschiedliche Vorteile erzielt. So werden die Objekte in der ersten Verfahrensalternative zum optimalen Zeitpunkt gebrochen, also genau dann, wenn das Objekt lokal ausreichend mechanisch geschwächt wurde. Die mechanische Schwächung kann dabei durch unterschiedliche Techniken erfolgen, bevorzugt durch Laserbearbeitung, aber auch bspw. durch mechanisches Ritzen oder chemisches Ätzen. Gerade bei Nutzung der Laserbearbeitung wird der Laserstrahl während der mechanischen Belastung des Objekts so oft entlang der jeweiligen Sollbruchlinie geführt, bis das Objekt bricht. In gleicher Weise wird auch beim mechanischen Anritzen der Ritzvorgang so oft wiederholt, bis das Objekt bricht. Damit wird jeweils nur so oft bzw. tief geritzt oder geschwächt, wie dies für das Teilen des Bauteils erforderlich ist. Weiterhin ist das Verfahren auch unempfindlich gegenüber Schwankungen der Dicke der zu teilenden Objekte, da diese - unabhängig von ihrer Dicke - jeweils solange geritzt bzw. mechanisch geschwächt werden, bis sie brechen. Dies gilt im Falle von Solarzellen auch für unterschiedliche Zelltypen, an die sich das Verfahren automatisch anpasst. Die lokale mechanische Schwächung wird durch Wiederholung des Bearbeitungsvorgangs einfach solange vergrößert, bis die Solarzelle bricht. Das Verfahren führt damit auch zu einer geringeren mechanischen und elektrischen Schädigung durch das Ritzen bzw. die lokale Materialschwächung.

Durch die Erzeugung des gleichmäßigen großflächigen Spannungszustandes wird eine Trennung bzw. Teilung des Objektes entlang mehrerer paralleler Trennlinien nacheinander oder - bei Nutzung mehrerer Laserstrahlen oder Lasereinrichtungen - auch zeitgleich ermöglicht, ohne das Objekt für jede Teilung neu einspannen oder anlegen zu müssen. Der großflächige gleichmäßige Spannungszustand führt dazu, dass die Spannung an den beabsichtigten Sollbruchlinien jeweils gleich ist, so dass für aufeinanderfolgend oder zeitgleich durchgeführte Teilungen jeweils die gleichen Parameter, bspw. der gleiche Satz von Laserparametern beim Laserritzen, eingesetzt werden können. Das Objekt wird daher mit dem vorgeschlagenen Verfahren sehr effizient in mehrere Streifen geteilt. Das Verfahren ermöglicht zudem eine sehr flexible Verfahrensführung, bei der die Anzahl der Teilungen bzw. Trennlinien von Objekt zu Objekt jederzeit verändert werden kann, ohne hierfür Änderungen an der für die Teilung eingesetzten Vorrichtung durchführen zu müssen.

Der gleichmäßige großflächige Spannungszustand wird dadurch erreicht, dass das Objekt entsprechend großflächig an eine gleichmäßig gewölbte Anlagefläche eines Auflageelementes, bspw. einer gewölbten Auflageplatte angepresst, insbesondere angedrückt oder angesaugt, wird. Die Wölbung der Auflageplatte oder auch eines anderen hierfür eingesetzten Auflageelementes wird vorzugsweise so gewählt, dass sie der Mantelfläche eines Kreiszylindersegmentes entspricht. Die Sollbruchlinie bzw. Sollbruchlinien liegt oder liegen dabei parallel zur Zylinderachse. Prinzipiell kann die Anlagefläche auch eine Struktur, bspw. parallel zu der Sollbruchlinie verlaufende Erhebungen oder Vertiefungen aufweisen, solange durch das Anpressen des Objektes die Erzeugung eines gleichmäßigen Spannungszustandes erreicht wird.

In einer besonders vorteilhaften Ausgestaltung wird das Auflageelement durch eine Walze oder ein Walzensegment gebildet, die oder das um eine Walzenachse rotierbar angeordnet bzw. gelagert ist. Auf diese Weise lässt sich durch Rotation der Walze oder des Walzensegmentes um die Walzenachse eine Relativbewegung des Objektes zu einer Lasereinrichtung erzeugen, um das Objekt nacheinander entlang mehrerer paralleler Sollbruchlinien teilen zu können. Eine Relativbewegung kann jedoch selbstverständlich auch durch entsprechende Bewegung der Lasereinrichtung oder eines den Laserstrahl entlang der Sollbruchlinie führenden Teils der Lasereinrichtung gegenüber dem Auflageelement erreicht werden.

In einer bevorzugten Ausgestaltung des Verfahrens wird die lokale mechanische Schwächung entlang der Sollbruchlinie durch lokale Modifikation des Werkstoffes oder durch Abtrag des Werkstoffes jeweils mittels Laserbearbeitung mit einem oder mehreren Laserstrahlen durchgeführt. Hierbei werden vorzugsweise Kurz- oder Ultrakurzpulslaser wie bspw. fs-, ps- oder ns-Laser eingesetzt, um die mechanische Schwächung zu erzeugen. Es kann aber auch ein cw-Laser eingesetzt werden. Der oder die Laserstrahlen werden dabei wiederholt entlang bzw. auf der jeweiligen Sollbruchlinie geführt, bis die mechanische Schwächung eine Größe erreicht hat, bei der das Objekt aufgrund der durch die gleichzeitige mechanische Belastung eingebrachten Zugspannung entlang der Sollbruchlinie bricht.

Beim vorgeschlagenen Verfahren kann die mechanische Belastung aber auch mit dem thermischen Laserseparieren oder laserthermischen Trennen kombiniert werden. Dies entspricht der zweiten Verfahrensalternative. Dadurch kann der Parameterraum von TLS vergrößert und der Riss über die mechanische Spannung zusätzlich in die gewünschte Richtung gelenkt werden. Beim bisherigen TLS kann das Problem auftreten, dass sich kein Riss bildet oder dass der Riss stoppt, weil die thermische Spannung nicht ausreicht. Dies limitiert z.B. den Parameter Vorschubgeschwindigkeit. Durch die zusätzliche mechanische Spannung beim hier vorgeschlagenen Verfahren kann dieses Problem vermieden werden. Weiterhin kann durch die gerichtete mechanische Spannung auch verhindert werden, dass z.B. bei monokristallinen Wafern oder Solarzellen der Riss am Rand des Wafers oder der Zelle nicht dem Laser sondern der kristallographischen Vorzugsrichtung folgt.

Die vorgeschlagene Vorrichtung weist entsprechend ein Auflageelement mit einer gleichmäßig gewölbten Anlagefläche sowie einen Anpressmechanismus, über den ein zu teilendes plattenförmiges Objekt großflächig an die Anlagefläche gepresst werden kann. Weiterhin weist die Vorrichtung eine Lasereinrichtung auf, mit der wenigstens ein Laserstrahl entlang einer Sollbruchlinie eines an die Anlagefläche gepressten Objekts geführt werden kann, um eine lokale mechanische Schwächung entlang der Sollbruchlinie im Objekt zu erzeugen. Das Auflageelement und die Lasereinrichtung sind dabei so ausgestaltet bzw. angeordnet, dass sie eine Relativbewegung senkrecht zur Sollbruchlinie durchführen können. Dies kann bspw. durch eine Anordnung der Lasereinrichtung bzw. eines Teils der Lasereinrichtung, der für die Führung des Laserstrahls über das Objekt eingerichtet ist, an einem Linearantrieb oder einer Linearachse erfolgen. In gleicher Weise kann auch das Auflageelement an einem derartigen Linearantrieb oder einer Linearachse angeordnet sein. In einer vorteilhaften Ausgestaltung wird das Auflageelement durch eine Walze oder ein Walzensegment gebildet, die oder das um eine Walzenachse rotierbar gelagert und mit einem entsprechenden Antrieb rotiert werden kann.

Das Verfahren und die Vorrichtung bieten vor allem Automatisierungsvorteile. Ein einmaliges Einspannen bzw. Anpressen des Objektes erlaubt es, das Objekt in mehrere Streifen zu teilen. Bei bisherigen Verfahren ist demgegenüber die Ausrichtung des Objekts für jeden Trennschritt einzeln durchzuführen. Die entstehenden Streifen können vor dem Teilen bzw. Brechen und während des gesamten Prozessverlaufes bei dem vorgeschlagenen Verfahren und der zugehörigen Vorrichtung festgehalten und direkt nach dem Prozess definiert abgelegt werden. Das Ritzen und das Brechen erfolgen in einem Prozessschritt, was den Zeitbedarf im Vergleich zu einem Verfahren verringert, bei dem zunächst geritzt und anschließend gebrochen wird. Durch die Ausführung in einem Prozessschritt reduziert sich auch die für die Vorrichtung erforderliche Aufstellfläche.

Das vorgeschlagene Verfahren eignet sich vor allem für das mehrfache Teilen von Platten aus spröden Werkstoffen, bspw. für das Teilen von Solarzellen. Dabei können die Zellen halbiert oder auch in noch kleinere Teile gebrochen werden. Die Solarzellen sind dabei typischerweise bereits fertig prozessiert. Selbstverständlich ist es aber auch möglich, die Trennung bzw. Teilung an nur teilprozessierten Zellen oder Wafern durchzuführen. Das Verfahren lässt sich auch auf andere plattenförmige Objekte anwenden, wie sie bspw. in der Mikroelektronik verwendet werden. So können bspw. Halbleitersubstrate oder Wafer mit dem Verfahren in kleinere Chips zerteilt werden. Auch die Trennung von anderen plattenförmigen Objekten aus spröden Werkstoffen, bspw. die Trennung von Glasscheiben oder Keramikplatten, ist mit dem Verfahren möglich.

### Kurze Beschreibung der Zeichnungen

Das vorgeschlagene Verfahren und die zugehörige Vorrichtung werden nachfolgend anhand eines Ausführungsbeispiels in Verbindung mit den Zeichnungen nochmals näher läutert. Hierbei zeigen:
- Fig. 1: beispielhaft einen ersten Schritt bei der Durchführung des vorgeschlagenen Verfahrens, bei dem das zu teilende Objekt an die Anlagefläche gepresst wird;
- Fig. 2: beispielhaft einen zweiten Schritt des vorgeschlagenen Verfahrens, bei dem das Objekt mit Hilfe eines Laserstrahls entlang einer Sollbruchlinie geteilt wird; und
- Fig. 3: beispielhaft einen dritten Schritt des vorgeschlagenen Verfahrens, bei dem das Objekt mit dem Laserstrahl entlang einer weiteren Sollbruchlinie geteilt wird.

### Ausführungsbeispiel

Bei dem vorgeschlagenen Verfahren wird das zu teilende Objekt, bspw. eine Solarzelle, großflächig an eine gewölbte Anlagefläche gepresst, um einen gleichmäßigen großflächigen Spannungszustand in dem Objekt zu erreichen, bei dem eine gerichtete Spannung senkrecht zu einer oder mehreren parallel verlaufenden Sollbruchlinien vorliegt.

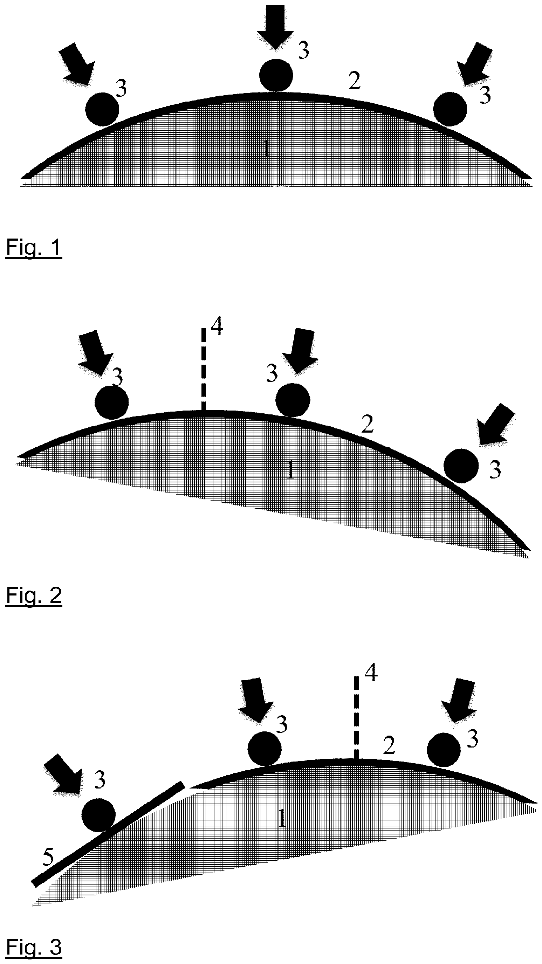

Figur 1 zeigt hierzu ein Beispiel, bei dem eine Walze 1 als Auflageelement genutzt wird. Der für die Auflage des Objektes genutzte Teil der Walzenoberfläche entspricht der Mantelfläche eines Kreiszylindersegmentes. Die jeweils für die Erzeugung des Spannungszustandes genutzte Wölbung hängt von dem Material und der Dicke der zu teilenden Objekte ab. Bei der Teilung von Solarzellen kann der Radius der Walze hierbei bspw. im Bereich zwischen 300 mm und 5000 mm liegen. Das zu teilende Objekt 2 wird auf die Anlagefläche gelegt und durch Halter 3, beispielsweise Sauggreifer, angepresst, wie dies schematisch in der Figur 1 angedeutet ist. Das Anpressen erfolgt an mehreren Punkten, die bspw. jeweils in der Mitte zwischen beabsichtigten Trennlinien liegen.

Das Anfahren der ersten Bearbeitungsposition für den Laserstrahl 4 erfolgt hierbei entweder durch Rotation der Walze 1 um die Walzenachse oder durch entsprechende Positionierung des für die Trennung eingesetzten Lasers. Ggf. muss auch noch eine Höhenjustage der Anlagefläche durchgeführt werden. Figur 2 zeigt hierzu eine Rotation der Walze 1, um die geplante Sollbruchlinie unter dem Laserstrahl 4 zu positionieren, der zum Laserritzen eingesetzt wird. Der Laserstrahl 4 trifft hierbei senkrecht über dem zu erzeugenden Riss auf das Objekt und wird mit Hilfe einer Scaneinrichtung (nicht dargestellt) entlang dieses Risses geführt. Der Laserprozess endet, sobald der Bruch entlang der Sollbruchlinie erfolgt ist. Hierbei sind ggf. mehrere Überfahren mit dem Laserstrahl 4 über die Sollbruchlinie erforderlich, wodurch die Ritztiefe sukzessive vergrößert wird. Erreicht die Ritztiefe einen kritischen Wert, so bricht das Objekt entlang der Sollbruchlinie.

Eine Teilung einer wie oben beschrieben mechanisch belasteten Solarzelle kann beispielsweise mit folgenden Laserparametern durchgeführt werden:
- Laserleistung: 3 W
- Pulsdauer: 8 ns
- Wellenlänge: 532 nm
- Spotdurchmesser: 20 µm (gaußförmig)
- Wiederholrate: 15 kHz
- Vorschub je Puls: ca. 5 um ~ ca. 75% Überlapp
- Anzahl Überfahrten: 5

Anschließend wird die Walze 1 durch Rotation erneut ausgerichtet (oder der Laser neu positioniert), so dass der nächste Schnitt entlang einer weiteren geplanten Sollbruchlinie erzeugt werden kann. Figur 3 zeigt hierzu beispielhaft die Situation nach einer Rotation der Walze 1 unter dem Laserstrahl 4. Bereits getrennte Streifen 5 des Objekts 2 verbleiben hierbei auf der Anlagefläche, bis alle Bearbeitungsschritte durchgeführt wurden. Je nach Größe des Objektbereiches, der an die Anlagefläche gepresst wird, um einen gleichmäßigen Spannungszustand in dem gesamtem angepressten Bereich zu erreichen, können auch mehr als zwei Trennschnitte entlang entsprechender Sollbruchlinien erzeugt werden. Sind alle Schnitte erzeugt, werden die Streifen 5 von der Anlagefläche genommen. Bei Nutzung von Saugelementen als Halter bzw. Anpresselemente 3 kann dies über entsprechende Bewegung dieser Halter 3 erfolgen. Hierfür eignen sich somit vorteilhaft Sauggreifer. Mit diesen können die geteilten Streifen direkt entnommen und abgelegt werden. Eine andere technische Realisierung kann bei über die Anlagefläche angesaugten Streifen 5 durch Drehung der Walze 1 und nachfolgendes Loslösen der Streifen 5 erfolgen.

### Bezugszeichenliste

- 1: Auflageelement
- 2: Objekt
- 3: Halter
- 4: Laserstrahl
- 5: abgetrennter Streifen

## Patentansprüche

1. Verfahren zum Teilen von plattenförmigen Objekten aus spröden Werkstoffen, bei dem das Objekt (2) zunächst mechanisch belastet wird, um eine gerichtete Spannung senkrecht zu wenigstens einer Sollbruchlinie zu erzeugen, entlang der die Teilung erfolgen soll, und dann während der mechanischen Belastung entlang der Sollbruchlinie mechanisch geschwächt oder thermisch belastet wird, bis das Objekt (2) entlang der Sollbruchlinie bricht,
wobei das Objekt (2) großflächig an eine gleichmäßig gewölbte Anlagefläche gepresst wird, um die gerichtete Spannung gleichmäßig über einen größeren Bereich des Objekts (2) zu erzeugen, **dadurch gekennzeichnet,**
**dass** das Objekt (2) während der mechanischen Belastung entlang mehrerer parallel verlaufender Sollbruchlinien in mehrere Streifen (5) geteilt wird.

2. Verfahren nach Anspruch 1,
**dadurch gekennzeichnet,**
**dass** die gewölbte Anlagefläche die Form einer Mantelfläche eines Kreiszylindersegmentes aufweist.

3. Verfahren nach Anspruch 1 oder 2,
**dadurch gekennzeichnet,**
**dass** als gewölbte Anlagefläche die Oberfläche einer Walze (1) oder eines Walzensegmentes genutzt wird, die oder das um eine Walzenachse rotierbar gelagert ist.

4. Verfahren nach Anspruch 1 oder 2,
**dadurch gekennzeichnet,**
**dass** als gewölbte Anlagefläche die Oberfläche einer gewölbten Platte genutzt wird.

5. Verfahren nach einem der Ansprüche 1 bis 4,
**dadurch gekennzeichnet,**
**dass** die mechanische Schwächung durch Modifikation oder Abtrag des Werkstoffes des Objekts (2) mittels Laserbearbeitung mit einem oder mehreren Laserstrahlen (4) erfolgt.

6. Verfahren nach Anspruch 5,
**dadurch gekennzeichnet,**
**dass** der eine oder die mehreren Laserstrahlen (4) für die Laserbearbeitung mehrfach entlang der jeweiligen Sollbruchlinie geführt werden, bis das Objekt (2) entlang der Sollbruchlinie bricht.

7. Verfahren nach einem der Ansprüche 1 bis 4,
**dadurch gekennzeichnet,**
**dass** die die mechanische Schwächung durch mechanisches Ritzen in das Objekt (2) eingebracht wird.

8. Verfahren nach Anspruch 7,
**dadurch gekennzeichnet,**
**dass** das mechanische Ritzen wiederholt entlang der jeweiligen Sollbruchlinie durchgeführt wird, bis das Objekt (2) entlang der Sollbruchlinie bricht.

9. Verfahren nach einem der Ansprüche 1 bis 4,
**dadurch gekennzeichnet,**
**dass** die lokale thermische Belastung durch Erwärmung mit einem Laserstrahl (4), mit oder ohne anschließender lokaler Kühlung, erfolgt.

10. Verfahren nach einem der Ansprüche 1 bis 9 zum Teilen von Halbleitersubstraten für die Mikroelektronik oder Photovoltaik, insbesondere von Wafern oder Solarzellen.

11. Vorrichtung zum Teilen von plattenförmigen Objekten aus spröden Werkstoffen,
die ein Auflageelement (1) mit einer gleichmäßig gewölbten Anlagefläche sowie einen Anpressmechanismus aufweist, über den ein zu teilendes plattenförmiges Objekt (2) großflächig an die Anlagefläche gepresst werden kann, und
die eine Lasereinrichtung aufweist, mit der wenigstens ein Laserstrahl (4) entlang einer Sollbruchlinie eines an die Anlagefläche gepressten Objekts (2) geführt werden kann, um eine lokale mechanische Schwächung entlang der Sollbruchlinie im Objekt (2) zu erzeugen, **dadurch gekennzeichnet,**
**dass** das Auflageelement (1) und die Lasereinrichtung so ausgestaltet und/oder angeordnet sind, dass sie eine Relativbewegung senkrecht zur Sollbruchlinie durchführen können.

12. Vorrichtung nach Anspruch 11,
**dadurch gekennzeichnet,**
**dass** die gewölbte Anlagefläche die Form einer Mantelfläche eines Kreiszylindersegmentes aufweist.

13. Vorrichtung nach Anspruch 11 oder 12,
**dadurch gekennzeichnet,**
**dass** das Auflageelement (1) durch eine Walze oder ein Walzensegment gebildet ist, die oder das mit einem Rotationsantrieb um eine Walzenachse rotiert werden kann.

## Claims

1. A method for splitting of plate-shaped objects made of brittle materials, in which the object (2) is first placed under mechanical load in order to generate a directed stress perpendicular to at least one predetermined breaking line, along which the splitting is to take place, and is then mechanically weakened or thermally loaded during the mechanical loading along the predetermined breaking line, until the object (2) breaks along the predetermined breaking line,
wherein the object (2) is pressed against a uniformly curved contact surface over a large area in order to generate the directed tension evenly over a relatively large area of the object (2),
**characterized in that**
the object (2) is split into multiple strips (5) along a plurality of parallel predetermined breaking lines during the mechanical loading.

2. The method according to Claim 1,
**characterized in that**
the curved contact surface has the shape of a lateral surface of a circular cylinder segment.

3. The method according to Claim 1 or 2,
**characterized in that**
the surface of a roller (1) or of a roller segment, which is mounted rotatably about a roller axis, is used as the curved contact surface.

4. The method according to Claim 1 or 2,
**characterized in that**
the surface of a curved plate is used as the curved contact surface.

5. The method according to any one of Claims 1 to 4,
**characterized in that**
the mechanical weakening takes place through modification or removal of the material of the object (2) by means of laser processing with one or more laser beams (4).

6. The method according to claim 5,
**characterized in that**
the one or more laser beams (4) for laser processing are guided multiple times along the respective predetermined breaking line until the object (2) breaks along the predetermined breaking line.

7. The method according to any one of Claims 1 to 4,
**characterized in that**
the mechanical weakening is introduced into the object (2) by mechanical scoring.

8. The method according to Claim 7,
**characterized in that**
the mechanical scoring is carried out repeatedly along the respective predetermined breaking line until the object (2) breaks along the predetermined breaking line.

9. The method according to any one of Claims 1 to 4,
**characterized in that**
the local thermal loading occurs due to heating with a laser beam (4), with or without subsequent local cooling.

10. The method according to any one of Claims 1 to 9 for splitting of semiconductor substrates for microelectronics or photovoltaics, in particular of wafers or solar cells.

11. An apparatus for splitting plate-shaped objects made of brittle materials,
which has a support element (1) with a uniformly curved contact surface and a pressing mechanism, by means of which a plate-shaped object (2) to be split can be pressed against the contact surface over a large area, and
which has a laser device with which at least one laser beam (4) can be guided along a predetermined breaking line of an object (2) pressed against the contact surface in order to generate a local mechanical weakening along the predetermined breaking line in the object (2),
**characterized in that**
that the support element (1) and the laser device are designed and/or arranged in such manner that they can perform a relative movement perpendicularly to the predetermined breaking line.

12. The apparatus according to Claim 11,
**characterized in that**
the curved contact surface has the shape of a lateral surface of a circular cylinder segment.

13. The apparatus according to Claim 11 or 12,
**characterized in that**
the support element (1) is formed by a roller or a roller segment, which can be rotated about a roller axis with a rotary drive.

## Revendications

1. Procédé de division d'objets en forme de plaque constitués de matériaux friables, dans lequel l'objet (2) est d'abord soumis à une contrainte mécanique afin d'obtenir une tension dirigée perpendiculairement à au moins une ligne de rupture de consigne, le long de laquelle la division doit avoir lieu, puis pendant la charge mécanique le long de la ligne de rupture de consigne, est mécaniquement affaibli ou soumis à une contrainte thermique jusqu'à ce que l'objet (2) se brise le long de la ligne de rupture de consigne, dans lequel l'objet (2) est pressé sur une grande surface contre une surface de contact uniformément incurvée afin de générer la tension dirigée uniformément sur une plus grande surface de l'objet (2), **caractérisé en ce que** l'objet (2) est divisé pendant le chargement mécanique en plusieurs bandes (5) le long de plusieurs lignes de rupture de consigne s'étendant parallèlement.

2. Procédé selon la revendication 1, **caractérisé en ce que** la surface de contact courbe présente la forme d'une surface enveloppante d'un segment de cylindre circulaire.

3. Procédé selon la revendication 1 ou 2, **caractérisé en ce que** la surface d'un rouleau (1) ou d'un segment de rouleau est utilisée comme surface de contact courbe, qui est montée rotativement autour d'un axe de rouleau.

4. Procédé selon la revendication 1 ou 2, **caractérisé en ce que** la surface d'une plaque courbe est utilisée comme surface de contact courbe.

5. Procédé selon une des revendications 1 à 4, **caractérisé en ce que** l'affaiblissement mécanique est réalisé par modification ou enlèvement de la matière de l'objet (2) au moyen d'un traitement laser avec un ou plusieurs faisceaux laser (4).

6. Procédé selon la revendication 5, **caractérisé en ce que** le ou les lasers émettent (4) pour le traitement au laser sont guidés plusieurs fois le long de la ligne de rupture de consigne respective jusqu'à ce que l'objet (2) se brise le long de la ligne de rupture de consigne.

7. Procédé selon une des revendications 1 à 4, **caractérisé en ce que** l'affaiblissement mécanique est induit dans l'objet (2) par entaillage mécanique.

8. Procédé selon la revendication 7, **caractérisé en ce que** l'entaillage mécanique est effectué de manière répétée le long de la ligne de rupture de consigne respective jusqu'à ce que l'objet (2) se brise le long de la ligne de rupture de consigne.

9. Procédé selon une des revendications 1 à 4, **caractérisé en ce que** la charge thermique locale se produit par chauffage avec un faisceau laser (4) avec ou sans refroidissement local ultérieur.

10. Procédé selon une des revendications 1 à 9 de division de substrats semi-conducteurs pour la microélectronique ou le photovoltaïque, notamment de tranches ou de cellules solaires.

11. Dispositif de division d'objets en forme de plaque constitués de matériaux friables, qui comportent un élément de support (1) avec une surface de contact uniformément incurvée et un mécanisme de pression, par lequel un objet en forme de plaque (2) à diviser peut être pressé fixé sur une grande surface sur la surface de contact et qui présente un dispositif laser avec lequel au moins un faisceau laser (4) peut être guidé le long d'une ligne de rupture de consigne d'un objet (2) pressé sur la surface de contact afin de provoquer un affaiblissement mécanique local le long de la ligne de rupture de consigne dans l'objet (2), **caractérisé en ce que** l'élément de support (1) et le dispositif laser sont conçus et/ou disposés de manière à pouvoir effectuer un mouvement relatif perpendiculaire à la ligne de rupture de consigne.

12. Dispositif selon la revendication 11, **caractérisé en ce que** la surface de contact courbe présente la forme d'une surface enveloppante d'un segment de cylindre circulaire.

13. Dispositif selon la revendication 11 ou 12, **caractérisé en ce que** l'élément de support (1) est formé par un rouleau ou un segment de rouleau, qui peut tourner autour d'un axe de rouleau avec un entraînement rotatif.
